# EUROPEAN PATENT SPECIFICATION

(11) **EP 3 759 906 B1**
(45) Date of publication and mention of the grant of the patent: **27.08.2025**
(21) Application number: 19712845.7
(22) Date of filing: 27.02.2019
(51) Int. Cl.: H04N 5/76, H04N 7/173, H04N 21/4147, H04N 21/433, H04N 21/61, H04N 21/274, G11B 20/10, H04L 65/612, H04L 65/75, H04L 65/80, H04L 67/02

(54) **APPARATUS, METHOD AND SYSTEM FOR MULTIPLE AUDIO-VIDEO STREAMS RECEPTION**
VORRICHTUNG, VERFAHREN UND SYSTEM ZUM EMPFANG MEHRERER AUDIO-VIDEO-DATENSTRÖME
APPAREIL, PROCÉDÉ ET SYSTÈME POUR LA RÉCEPTION DE FLUX AUDIO-VIDÉO MULTIPLES

(30) Priority: 27.02.2018 IT 201800003105
(43) Date of publication of application: 06.01.2021
(73) Proprietor: Sky Italia S.r.L., 20138 Milano (IT)
(72) Inventor: UBERTINI, Gabriele, 20138 Milano (IT); COLELLA, Stefano, 20138 Milano (IT)
(74) Representative: Hoffmann Eitle
(86) International application number: PCT/IB2019/051561
(87) International publication number: WO 2019/166960

(56) References cited:
- EP-A1- 2 456 202
- EP-A2- 2 954 683
- EP-B1- 2 954 683
- WO-A1-2013/173554
- US-A1- 2001 033 343

## Description

### FIELD OF THE INVENTION

The present invention relates to methods, devices and systems for delivering content, in particular for delivering audiovisual content by means of streaming techniques in an OTT (over-the-top) environment.

### BACKGROUND OF THE INVENTION

According to conventional techniques, the distribution of television programs is traditionally achieved using radiofrequency (RF) "over the air" (OTA) broadcasting or a cable distribution network. In recent years, however, many service providers have been offering more and more video content to non-traditional devices (e.g. PCs, tablets, smartphones, etc.) using wireless networks or data networks like the Internet.
This technique of distributing television content is also known as OTT (over-the-top).
In the case of content distribution over data networks, service providers generally use adaptive bit rate (ABR) streaming techniques in combination with the Hypertext Transfer Protocol (HTTP) commonly used on the Internet. These solutions include, for example, Apple's HLS (HTTP Live Streaming), Microsoft's Smooth Streaming, and MPEG-DASH (Motion Picture Experts Group Dynamic Adaptive Streaming over HTTP).

In general, ABR streaming is designed to work over a type of network such as the Internet, where resources are not dedicated and guaranteed at every instant for a certain connection. The optimal bit rate is selected according to the current network status. In practical terms, adaptive bit rate streaming works by monitoring the parameters of the client (such as bandwidth and/or processing capacity) and adjusting the streaming quality (for example, the bit rate and resolution) based on the detected bandwidth and the processing capacity. For this purpose, at the server delivering the content, every original stream is encoded with different levels of quality, for example with different bit rates.

According to the ABR streaming technique, content is generally divided into segments, each of which corresponding to several seconds of the audiovisual content. From a server delivering the service, the client receives a list (also known as a "manifest" or "playlist" in the technical field of reference) which identifies each of these segments with respective levels of quality available for each segment. The client can select the segments with a compatible quality based on bandwidth availability and/or processing capacity, in such a way as to avoid interruptions in the reproduction of the content and maximise the quality of the content reproduced.

A manifest normally refers to a portion of a television program, containing, for example, the URL that can be used to download the segments relating to a part of a program; once the client has processed the portion of content identified by a manifest, the client requests from the server delivering the service a new manifest, which identifies the subsequent segments of the program to be played back to the client.

In the prior art solutions that employ the above-described streaming techniques in a linear OTT channel (i.e. a channel in which the programs follow one another according to a pre-established show schedule), it is not possible, however, to satisfactorily enjoy the personal video recording (PVR) functions, such as, for example, recording a program, rewinding, pausing and so forth.
EP 2 954 683 A2 discloses that, since adaptive bit rate media segments are available on the adaptive bit rate system in one of several bit rates, the client may switch bit rates at the media segment boundaries.
WO 2013/173554 A1 discloses a method comprising generating a top-level manifest file for a media asset or stream that includes program event information, providing the top-level manifest file and corresponding element manifest files to a real-time ABR packager, and receiving a request for a media-segment file from a client.
US 2001/033343 A1 discloses a personal video on-demand system and method which permits a user to receive available content using at least two tuners and perform one of a plurality of operations on the available content.
EP 2 456 202 A1 discloses a set top box device, system and method for realizing interactive IPTV channel recording and playing.

### SUMMARY OF THE INVENTION

The object of the present invention is to remedy the problems tied to the known techniques and thus to improve the same.

In particular, the present invention has the object of improving the delivery of audiovisual content to clients in an OTT environment. A further object of the invention is to effectively allow the clients of an OTT service to use PVR functions. In view of the above objects, the present invention proposes a terminal as defined by claim 1, an apparatus according to claim 5, a System according to claim 8, and a method according tc claim 9.

According to a first aspect of the invention, there is provided a terminal for exploiting (or acquiring) at least an audio and/or video content provided by means of a network via a linear channel by a providing entity, the terminal comprising:
requesting means for sending a first request for a content item to said providing entity,
receiving means for receiving from the providing entity, in response to the first request, a first list including a plurality of first information elements, each first information element of the first list relating to a first segment of content, wherein an assembly of the first segments constitutes a content portion of a current event in the show schedule of the linear channel, the content portion relating to the current instant,
content acquisition and reproduction means suitable for acquiring from the providing entity said first segments of content by using said first information elements included in the first list;
inputting means configured to receive commands from a terminal user;
wherein said requesting means are configured to send, in response to a command input by the terminal user via said inputting means, a second request to the providing entity in order to obtain a second list including a plurality of second information elements, each second information element relating to a second segment of content, wherein an assembly of the second segments constitutes the entire content corresponding to the entirety of the current event in the show schedule of the linear channel,
the receiving means being configured to receive said second list from the providing entity;
the content acquisition and reproduction means (21, 22, 26) being configured to acquire from the providing entity the second segments of content by using said second information elements included in the second list.

According to an aspect, in addition to the playlist of the so-called "rolling" type (the first list), the terminal receives, at the user's request, a second playlist (the second list), which includes information elements configured to retrieve all segments of a current television program. This enables the terminal to download all of the audiovisual content of a television program in a safe and effective manner, while maintaining the reproduction of live programs via the rolling-type playlist.

According to an aspect, after having acquired the second segments from the providing entity, the acquisition and reproduction means of the terminal are configured to memorize the second segments in a non-volatile memory of the terminal. Thanks to this aspect, the terminal can have at its disposal the entire content of a television program memorized locally in the terminal itself, thus enabling PVR functions such as pausing, rewinding, etc. on the downloaded program.

According to an aspect, the terminal is configured to receive the second segments in encrypted form and to memorize the second segments in encrypted form in the non-volatile memory. This allows the entire content of a television program to be memorized without tying up processing resources of the terminal to decipher the content. In this manner, the reproduction of the live stream obtained through the playlist of a rolling type is not hindered or slowed.

According to an aspect, the first list is of the ABR-type (adaptive bit rate), wherein the first segments have a resolution which can vary between a maximum resolution and a minimum resolution, while the second list is at the maximum bit rate, wherein all the second segments have a constant maximum resolution. This allows the entire content of a television program to be downloaded at the maximum quality, thus improving the PVR functions of the terminal.

According to an aspect, while the acquisition and reproduction means of the terminal acquire the second segments of content from the providing entity, the acquisition and reproduction means are configured to reproduce another content item provided by the providing unit via the linear channel and acquired by using the first list. In this manner, the content of the television program downloaded by using the second list is downloaded in the background, without affecting the reproduction of the live programs downloaded via the playlist of a rolling type.

According to a further aspect, there is provided a providing entity for providing at least an audio and/or video content to a terminal by means of a communication network via a linear channel, said entity comprising:
generation means configured to generate a first list of first information elements, each first information element relating to a first segment of content, wherein an assembly of the first segments constitutes a content portion of a current event in the show schedule of the linear channel, the content portion relating to the current instant;
receiving means configured to receive, from the terminal, a first request for a list of first information elements;
sending means configured to send, in response to said first request, a response comprising the first list of information elements,
wherein the receiving means are configured to receive a second request from the terminal,
wherein the generation means are configured to generate, in response to said second request, a second list including a plurality of second information elements, each second information element relating to a second segment of content, wherein an assembly of the second segments constitutes the entire content corresponding to the entirety of the current event in the show schedule of the linear channel,
the providing entity comprising means configured to make the first and second segments of content available to the terminal for acquisition by the terminal.

According to a further aspect, there is provided, according to the invention, a method for enjoying, by means of a terminal, at least an audio and/or video content provided by a providing entity through a communication network via a linear channel, comprising the steps of:
sending, by means of the terminal, a first request for a content item to said providing entity,
receiving, via the terminal, from the providing entity in response to the first request, a first list including a plurality of first information elements, each first information element of the first list relating to a first segment of content, wherein an assembly of the first segments constitutes a content portion of a current event in the show schedule of the linear channel, the content portion relating to the current instant,
acquiring, via the terminal, said first segments of content from the providing entity by using said first information elements included in the first list;
in response to a command received from a terminal user, sending, via the terminal, a second request to the providing entity in order to obtain a second list including a plurality of second information elements, each second information element relating to a second segment of content, wherein an assembly of the second segments constitutes the entire content corresponding to the entirety of the current event in the show schedule of the linear channel,
acquiring, by means of the terminal, from the providing entity, the second segments of content by using said second information elements included in the second list.

### LIST OF FIGURES

- Figure 1 shows a terminal and a content providing entity according to the invention;
- figure 2 shows a functional block diagram of a terminal according to one embodiment of the invention;
- figure 3 shows a diagram which shows the operation of the streaming technique according to one embodiment of the invention;
- figure 4 shows a functional block diagram of a providing entity according to one embodiment of the invention;
- figure 5 shows a block diagram of a computer capable of implementing the present invention according to one embodiment.

### DETAILED DESCRIPTION

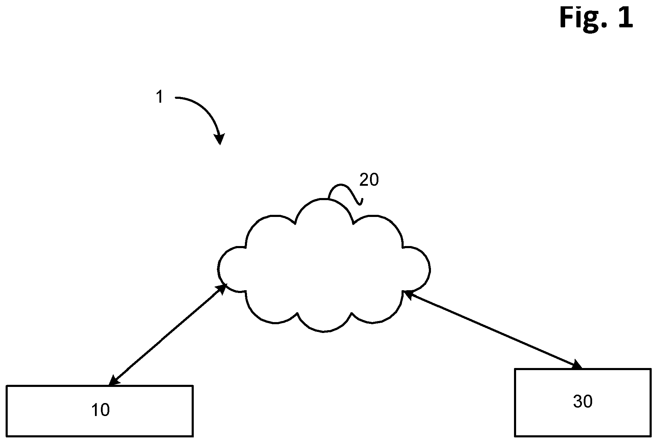

Figure 1 shows a system 1 for enjoying audio and/or video content, such as, for example, a television program. The system 1 comprises a terminal 10 and a providing entity for providing the audio and/or video content 30, connected to each other by means of a communication network 20. The system 1 forms an OTT system for distributing audio and/or video content via a linear channel.

"Linear channel" here means a channel that provides for the broadcasting of television programs (or events) according to a pre-established sequence (show schedule) by means of the IP network, in a manner that is similar to traditional radio-frequency broadcasting of television programs.

The terminal 10 is advantageously produced in the form of an IPTV set-top box (STB) or an IP box, to be installed, for example, in the homes of end users who acquire the audio-video content. Alternatively, the terminal 10 could also be produced in the form of a tablet, a smart TV or a smartphone. Advantageously, the terminal 10 is configured to decipher content received in encrypted form. Furthermore, the terminal 10 is advantageously configured to decompress the content received in compressed form, for example in accordance with the MPEG/AVC standard. According to a preferred embodiment, the terminal 10 can be connected to a display or television set (for example by means of an HDMI cable), to which it sends the signals for viewing after deciphering and decompression.

The communication network 20 can comprise one or more networks, which include Internet networks and/or wireless networks, for data transmission.

The providing entity 30 can be made up of one or more distributed servers, although it is represented in the figures as a single block for the sake of simplicity.

In order to achieve distribution of the audio and/or video content via streaming, the providing entity 30 and the terminal 10 can implement any known streaming technique, such as, for example, HLS, Microsoft SS, MPEG - DASH, etc.

The providing entity 30 is capable of providing the terminal 10 with a first list (live playlist, or rolling-type playlist) of first information elements, each relating to a first segment of content to be provided, wherein the first segments constitute a content portion corresponding to the current instant of the event represented by the content item in the show schedule of the linear channel.

For the purpose of carrying out the function of acquiring the audio/video content of the linear channel by using a rolling-type playlist, the terminal 10 comprises:
- requesting means for sending a first request for a content item to the providing entity 30,
- receiving means for receiving from the providing entity 30, in response to the first request, the first list (rolling-type playlist) including the plurality of first information elements, and
- content acquisition and reproduction means suitable for acquiring from the providing entity 30 the segments of content by using the information elements included in the rolling-type list.

The first list (rolling-type playlist) refers to a time window that includes the current instant. In other words, by using the rolling-type list, the terminal 10 is able to download a portion of the audio/video content of the linear channel currently received by the terminal 10 in real time. The linear channel currently received by the terminal 10 can be selected by the terminal user by using known inputting means, for example a remote control. When the first rolling-type list becomes obsolete (for example, when the terminal 10 has acquired all the segments described in the current rolling-type list), the terminal 10 can automatically send a subsequent request for a new first list to the providing entity 30 in order to obtain new information elements to be used to download new segments of audio/video content of the linear channel currently received.

Advantageously, the information elements included in the first list comprise network addresses and/or resource identifiers, such as, for example, URLs that can be used by the terminal 10 to download the segments of audio/video content.

According to the invention, the requesting means of the terminal 10 are configured to send, in response to a command received from a terminal user, a second request to the providing entity 30 in order to obtain a second list including a plurality of second information elements, each relating to a second segment of content, wherein an assembly of the second segments constitutes the entire content corresponding to the entirety of the current event in the show schedule of the linear channel. In other words, the second list refers to the entirety of the current television program. In one embodiment, the first segments and second segments refer to the same television program (or event) broadcast via the same linear channel currently received by the terminal 10. In any case, as discussed below, during the downloading of the second segments it is possible to change the linear channel received in real time by the terminal 10 using the first list; in such a case the first and second segments can refer to different television programs (or events) broadcast via two distinct linear channels.

The receiving means of the terminal 10 are configured to receive said second list of the providing entity 30, and the acquisition and reproduction means of the terminal 10 are configured to acquire from the providing entity 30 all of the second segments of content, by using the information elements included in the second list. The second list covers an entire television program from the start to the end, including information elements relating to segments that constitute an entire television event. Accordingly, the generation means of the providing entity 30 are configured to generate the second list including information elements that can be used by the terminal 10 to retrieve segments of the program which constitute the entire content of the current event of the linear channel. Advantageously, the information elements included in the second list comprise network addresses and/or resource identifiers, such as, for example, the URLs that can be used by the terminal 10 to download the segments of audio or video content.

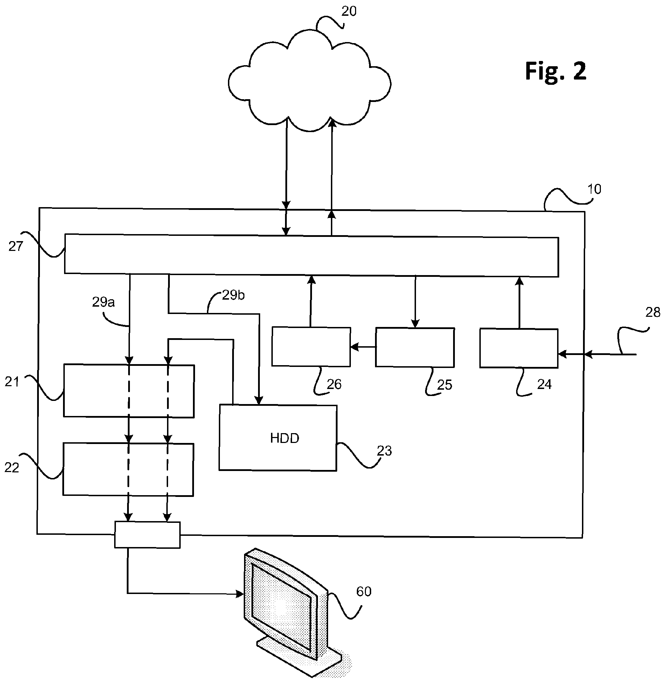

Figure 2 shows a functional diagram of the terminal 10 produced, in an example embodiment of the invention, as an IPTV set-top box or an IP box.

In figure 2, the requesting means for requesting the first and second lists are represented by the number 24. The requesting means 24 are configured to send a request for a first rolling-type list and a request for a second list in response to a command 28 input by the user (for example by means of a remote control or, more in general, via inputting means of the terminal 10). The request for a first and a second list are transmitted to the providing entity 30 via a transmission interface 27, which transmits and receives the data by means of the IP communication network 20.

The receiving means of the terminal 10 configured to receive the first and second lists from the providing entity 30 are represented in figure 2 by the reference number 25. The receiving means 25 receive the first and second lists from the providing entity 30 by means of the IP network 20 and the communication interface 27. The receiving means 25 provide the first and second lists of information elements to the acquisition means 26.

The acquisition and reproduction means according to the invention comprise the acquisition means 26 and reproduction means 21 and 22 as represented in figure 2. The acquisition means 26 control the download, via the IP network 20, of the segments of content to which the information elements (for example URLs) contained in the lists received by the receiving means 25 refer. The segments of content are received by the terminal 10 in an IP transmission format via the interface 27.

In particular, the first segments of content obtained by using the information elements contained in the first rolling-type list are indicated by the reference number 29a and are sent to the reproduction means 21, 22 as soon as they are received, then to be reproduced in real time by means of the television 60 connected to the terminal 10.

The reproduction means 21, 22 comprise a decipherer 21 capable of deciphering the signals relating to the segments of content received in encrypted form. The decrypted signals are sent by the decipherer 21 to the decompressor 22, which decompresses the signals relating to the first segments of content and then sends the signals to an output of the terminal towards the television set 60. The decompressor 22 can operate according to known standards such as, for example, the MPEG/AVC standard.

Advantageously, the first segments of content obtained by using the rolling-type list are saved in a buffer as they are received by the terminal 10, so that they can then be deciphered and decompressed at the appropriate moment in the process of reproducing the content in real time.

The television set 60 connected to the terminal 10, for example by means of an HDMI cable and connection, is also represented in figure 2. The terminal 10, following deciphering and decompression, sends the audiovisual signal to the television set 60 for viewing thereof by the terminal user.

In an advantageous embodiment of the invention, the second segments of content 29b received by the terminal 10, by using the second list of information elements, are received in an encrypted form and saved in a non-volatile memory 23 of the terminal 10 in encrypted form, thus without being sent to the decipherer 21 and decompressor 22. For example, the second segments are saved on a hard disk 23 of the terminal 10. Preferably, for each second segment (or chunk) received by the terminal 10, this segment is memorized on the hard disk 23, possibly with the addition of the metadata necessary for then reproducing the recorded content by means of reproduction software of the terminal 10. Thanks to the fact that the second segments 29b of content are recorded in an encrypted form, it is possible not to tie up the reproduction means 21-22 during the acquisition of the second segments of content, thus enabling the terminal user 10 to view other content also of another linear channel while recording of an entire program takes place in the background, by using the second list of information elements. For example, while the terminal 10 downloads and memorizes the content obtained by using the second list in the non-volatile memory 23, the terminal can acquire the first segments of content by using the rolling-type list and reproduce the live content of the linear channel by using the reproduction means 21-22. When the content recorded in the memory 23 must then be reproduced, the content is sent to the reproduction means 21-22 for deciphering and decompression before being sent to the display 60.

Here it is desired to point out that the representation of figure 2 constitutes a functional diagram of the terminal 10 for illustrative purposes, and that the different means 24, 25, 26, 21 and 22 can be produced with distinct or joint hardware components and/or with different software modules.

According to a preferred embodiment, the first list of information elements is of the ABR-type (adaptive bit rate), so the first segments downloaded by the terminal 10 can have a variable resolution. In other words, the quality of the segments obtained by using the first list differ from segment to segment, since the first list includes the information elements which allow the terminal to retrieve the first segment in a desired resolution (or bit rate), according to the availability of resources (reception bandwidth and/or processing capacity) at the terminal 10. The second list of information elements, by contrast, is a list at the maximum bit rate, wherein all the segments of the second list have a maximum resolution, that is, a constant maximum resolution for all the segments of the second list. In other words, the information elements of the second list allow the terminal 10 to download the content at the maximum possible resolution, which corresponds to the maximum resolution at which the content is available at the providing entity. In a specific example, the information elements of the second list include URLs that can be used to download only segments at the maximum resolution. Alternatively, the second list of information elements is a list at a variable bit rate, wherein the segments of the second list have a variable resolution ranging between a maximum and a minimum.

According to a preferred embodiment, the providing entity 30 also performs a function of making the first and second segments available for downloading by the terminal 10 via the IP network 20, making the first and second segments available for downloading by using the information elements (e.g. URLs) of the first and second lists. Advantageously, the entity 30 maintains the second segments of content available for acquisition by the terminal for a pre-established amount of time also after the end of the event (or program) represented by the content according to the show schedule of the linear channel. This allows the terminal 10 to complete the download of the complete event even if the program in the linear channel has already ended according to the show schedule.

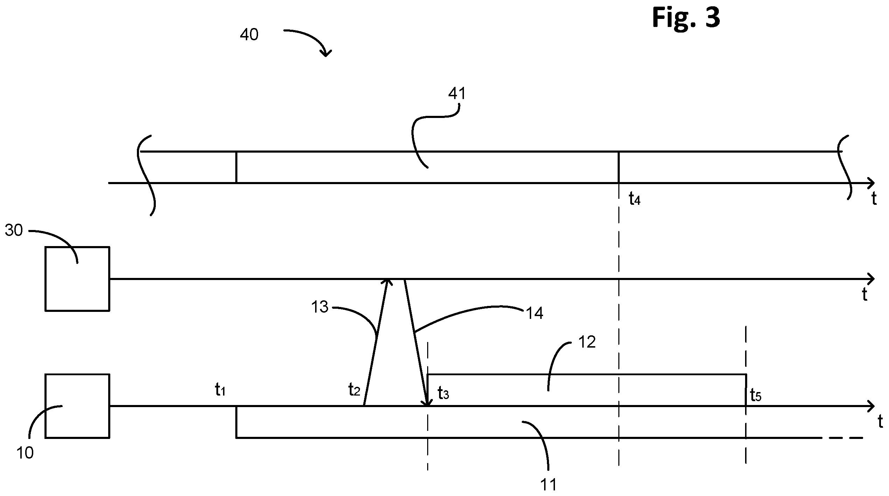

Figure 3 shows a diagram showing the operations of the terminal 10 and of the providing entity 30 according to a possible operating mode of the present invention.

At the instant tl, the reception and reproduction of a linear channel 40 is started at the terminal 10, for example by means of a command given by the user by means of a remote control. Starting from the instant t1, the terminal 10 downloads and reproduces the program 41 of the linear channel 40 by means of a stream 11, using a first rolling-type list of information elements to retrieve the first segments of content of the linear channel. During reproduction of the program 41 of the linear channel 40, at the instant t2 the terminal user 10 gives a command to record the program.

At the instant t2, the terminal 10 sends the request 13 to the providing entity 30 in order to obtain a second list including a plurality of second information elements relating to an assembly of the second segments, which constitutes the entire content of the program (or event) 41 in the show schedule of the linear channel 40. At the instant t3, the terminal 10 receives the second list of information elements 14 from the providing entity 30.

Starting from the instant t3, in parallel with the stream 11 downloaded by using the first rolling-type list, the terminal 10 starts a second process of acquiring the content by using the second list of information elements, indicated in the figure by the reference number 12. The downloading of the entire content relating to the program 41 can also last beyond the instant t4 at which the program 41 ends according to the show schedule of the linear channel 40. Advantageously, after the end of the current program 41, the second segments are kept available for downloading by the terminal 10 for a length of time equal to X hours, where X is greater than or equal to 4 or, more preferably, where X is greater than or equal to 12. At the instant t5, the process 12 of acquiring the content of the entire program by using the second list is concluded. At this point, the entire program 41 is available for reproduction, having been saved in the fixed memory of the terminal 10. It is noted that, during the process of downloading the program 41 via streaming 12, the terminal user 10 could also change the channel and view another channel other than the channel 40 by using a first rolling-type list in the streaming operation. Therefore, the program 41 can be downloaded in the background, without affecting, hindering or slowing down in any way the obtainment and reproduction of the live content of the linear channel. Furthermore, the program 41 downloaded by means of the downloading process via streaming 12 using the second list, can also be reproduced at a later time, paused or rewound, thus achieving a PVR function in the OTT system.

The providing entity 30 can be made up of a single device or, alternatively, a set of mutually interconnected devices, and can in particular be implemented in hardware, software or a combination thereof, in either a concentrated or distributed form; the same applies for the means included therein. Examples of a providing entity are a server, a server farm, a software solution implemented on a cloud platform, etc.

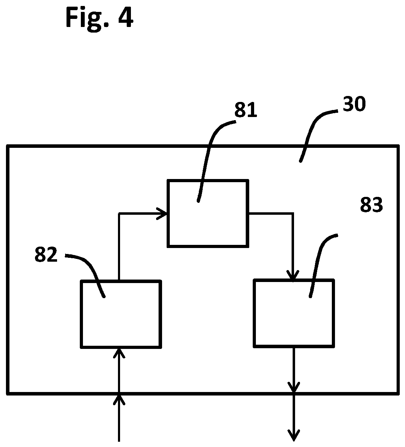

Figure 4 shows a functional diagram of the providing entity 30. In particular, the providing entity 30 comprises receiving means 82 configured to receive a first request for a first list or a second request for a second list from the terminal 10 by means of the communication network 20. The providing entity 30 comprises generation means 81 configured to generate the first or second list in response to the request of the terminal 10. The providing entity 30 further comprises sending means 83 configured to send the first and the second list generated by the generation means 82 to the terminal 30 via the IP network 20. The providing entity 30 further comprises means for making the first and second segments available so as to be able to be downloaded by the terminal (not shown in the figure), for example by making the segments of content available for downloading where there are network resources identified by the elements of the first and second lists. The means for making the content available can be made up of one or more distributed IP servers.

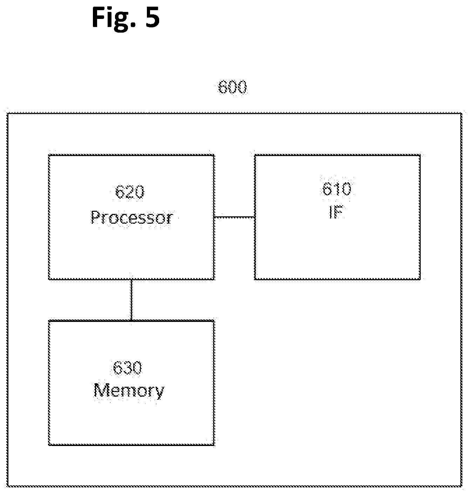

According to one embodiment, there is further provided a computer program configured to perform, when the program is run on a computer, any function or combination of functions of the terminal 10 or of the providing entity 30 described with reference to the embodiment of figures 1-5. Figure 5 illustrates a block diagram exemplifying a computer 600 capable of running the aforesaid program. In particular, the computer 600 comprises a memory 630 for storing the program instructions and/or data necessary for the execution thereof, a processor 620 for executing the instructions themselves and an input/output interface 610.

In the light of the foregoing description, the advantages of the present invention appear evident. In fact, by means of a simple command input by the terminal user, it is possible to start and make a complete recording of a television program in the terminal 10 in an OTT environment. The content is downloaded and saved locally in the terminal 10 at the maximum possible resolution in a fixed memory of the terminal. This makes it possible to achieve, in a simple and effective manner, a PVR (personal video recording) function also in the case of an IP (OTT) type of receiver, such as an IP box or an IPTV set-top box. Furthermore, the terminal user 10 can continue to view other programs during recording, enabling the flexibility of use of the device to be increased.

## Claims

1. Terminal (10) for acquiring at least an audio and/or video content provided by means of a communication network (20) via a linear channel (40) by a providing apparatus (30) in an over-the-top, OTT, environment, the terminal (10) comprising:
requesting means (24) for sending to said providing apparatus (30) a first request for a content,
receiving means (25) for receiving from the providing apparatus (30), in response to the first request, a first list including a plurality of first information elements, each first information element of the first list relating to a first segment of the content, wherein an assembly of the first segments constitutes a content portion of a current event in a show schedule of the linear channel, the content portion relating to the current instant, content acquisition and reproduction means (21, 22, 26) suitable for acquiring from the providing apparatus (30) said first segments of content by using said first information elements included in the first list;
**characterized in that** said requesting means (24) are configured for, in response to a command (28) received from a terminal user, sending a second request (13) to the providing apparatus (30) for obtaining a second list (14) including a plurality of second information elements, each second information element relating to a second segment of the content, wherein an assembly of the second segments constitutes a content corresponding to the entirety of the current event (41) in the show schedule of the linear channel (40),
the receiving means (25) being configured for receiving said second list from the providing apparatus (30);
the content acquisition and reproduction means (21, 22, 26) being configured for acquiring from the providing apparatus (30) the second segments of contents by using said second information elements included in the second list,
wherein the terminal is configured to receive the second segments in an encrypted form and to memorize the second segments in an encrypted form on a non-volatile memory (23) of the terminal,
wherein, while the content acquisition and reproduction means (21, 22, 26) acquire the second segments of content from the providing apparatus entity (30), the content acquisition and reproduction means (21, 22) are configured to reproduce another content provided from the providing apparatus (30) via the linear channel (40) and acquired by using the first list.

2. The terminal according to claim 1, wherein the first list is of the ABR-type (Adaptive Bit Rate), wherein the first segments have a resolution which can vary between a maximum resolution and a minimum resolution;
and in that the second list is at maximum bit rate, wherein all the second segments have a maximum resolution at which the content is available at the providing entity.

3. The terminal according to any one of the preceding claims, wherein the content acquisition and reproduction means (21, 22, 26) are configured for memorizing the first segments in a buffer of the terminal (10).

4. The terminal according to any one of the preceding claims, wherein said first and second information elements comprise web addresses and/ or resource identifiers.

5. Apparatus providing (30) at least an audio and/ or video content to a terminal (10) via a linear channel (40) by means of a communication network (20) in an over-the-top, OTT, environment, said apparatus (30) comprising:
generation means configured for generating a first list of first information elements,
each first information element relating to a first segment of the content, wherein an assembly of the first segments constitutes a content portion of a current event in a show schedule of the linear channel, the content portion relating to the current instant;
receiving means (25) configured for receiving, from the terminal (10), a first request for a list of first information elements;
sending means configured to send, in response to said first request, a response comprising the first list of information elements,
**characterized in that** the receiving means are configured for receiving a second request (13) from the terminal (10),
wherein the generation means are configured for generating, in response to said second request (13), a second list (14) including a plurality of second information elements, each second information element relating to a second segment of the content, wherein an assembly of the second segments constitutes a content corresponding to the entirety of the current event in the show schedule of the linear channel,
the providing apparatus including means being configured for making available to the terminal (10) the first and the second segments of the content for the acquisition by the terminal by using the information elements of the first and second lists,
wherein the providing apparatus (30) is configured to provide the second segments to the terminal (10) in an encrypted form,
and, the providing apparatus (30) is configured to provide the second segments of content while the terminal reproduces another content acquired by using the first list from the providing apparatus (30) via the linear channel (40).

6. Apparatus according to claim 5, comprising a single device or a plurality of distributed devices.

7. Apparatus according to claim 5 or 6, being configured to keep said second segment available for being acquired by the terminal for a predetermined amount of time after the end of the current event (41) according to the show schedule of the linear channel.

8. System comprising a terminal according to any one of claims from 1 to 4 and a providing apparatus according to any one of claims from 5 to 7.

9. Method for acquiring, by means of a terminal (10), at least an audio and/ or video content provided from a providing entity (30) by means of a communication network (20) via a linear channel (40) in an over-the-top, OTT, environment, comprising the steps of:
sending, by means of the terminal, to said providing apparatus (30) a first request for a content,
receiving, via the terminal, from the providing apparatus (30) in response to the first request, a first list including a plurality of first information elements, each first information element of the first list relating to a first segment of the content, wherein an assembly of the first segments constitutes a content portion of a current event in a show schedule of the linear channel, the content portion relating to the current instant,
acquiring, via the terminal, from the providing apparatus (30) said first segments of content by using said first information elements included in the first list;
**characterized in that** it comprises the steps of:
in response to a command received from a terminal user, sending, via the terminal, a second request to the providing apparatus (30) for obtaining a second list including a plurality of second information elements, each second information element relating to a second segment of the content, wherein an assembly of the second segments constitutes the entire content corresponding to the entirety of the current event in the show schedule of the linear channel, acquiring, by means of the terminal, from the providing apparatus (30) the second segments of the content by using said second information elements included in the second list,
wherein the method further comprises receiving the second segments in an encrypted form and memorizing the second segments in an encrypted form on a non-volatile memory (23) of the terminal,
and, while acquiring the second segments of content from the providing apparatus (30),
reproducing another content provided from the providing apparatus (30) via the linear channel (40) and acquired by using the first list.

## Patentansprüche

1. Terminal (10) zum Erfassen mindestens eines Audio- und/oder Videoinhalts, der mittels eines Kommunikationsnetzwerks (20) über einen linearen Kanal (40) von einer Bereitstellungsvorrichtung (30) in einer Over-the-Top-, OTT-Umgebung bereitgestellt wird, wobei das Terminal (10) Folgendes umfasst:
Anfragemittel (24) zum Senden einer ersten Anfrage nach einem Inhalt an die Bereitstellungsvorrichtung (30),
Empfangsmittel (25) zum Empfangen aus der Bereitstellungsvorrichtung (30), als Antwort auf die erste Anfrage, einer ersten Liste, die eine Vielzahl von ersten Informationselementen einschließt, wobei sich jedes erste Informationselement der ersten Liste auf ein erstes Segment des Inhalts bezieht, wobei eine Zusammenstellung der ersten Segmente einen Inhaltsabschnitt eines aktuellen Ereignisses in einem Vorstellungszeitplan des linearen Kanals darstellt, wobei der Inhaltsabschnitt sich auf das aktuelle Ereignis bezieht, Inhaltserfassungs- und Vervielfältigungsmittel (21, 22, 26), die zum Erfassen der ersten Inhaltssegmente aus der Bereitstellungsvorrichtung (30) geeignet sind, indem sie die ersten in der ersten Liste eingeschlossenen Informationselemente verwenden;
**dadurch gekennzeichnet, dass** die Anfragemittel (24) so konfiguriert sind, dass sie als Antwort auf einen von einem Endbenutzer empfangenen Befehl (28) eine zweite Anfrage (13) an die Bereitstellungsvorrichtung (30) senden, um eine zweite Liste (14) zu erhalten, die eine Vielzahl von zweiten Informationselementen einschließt, wobei sich jedes zweite Informationselement auf ein zweites Segment des Inhalts bezieht, wobei eine Zusammenstellung der zweiten Segmente einen Inhalt darstellt, der der Gesamtheit des aktuellen Ereignisses (41) im Vorstellungsplan des linearen Kanals (40) entspricht,
wobei die Empfangsmittel (25) so konfiguriert sind, dass sie die zweite Liste von der Bereitstellungsvorrichtung (30) empfangen;
wobei die Inhaltserfassungs- und Vervielfältigungsmittel (21, 22, 26) so konfiguriert sind, dass sie die zweiten Inhaltssegmente von der Bereitstellungsvorrichtung (30) erfassen, indem sie die Informationselemente verwenden, die in der zweiten Liste eingeschlossen sind,
wobei das Terminal so konfiguriert ist, dass es die zweiten Segmente in verschlüsselter Form empfängt und die zweiten Segmente in verschlüsselter Form in einem nichtflüchtigen Speicher (23) des Terminals speichert,
wobei, während die Inhaltserfassungs- und Vervielfältigungsmittel (21, 22, 26) die zweiten Inhaltssegmente von der Bereitstellungsvorrichtung (30) erfassen, die Inhaltserfassungs- und Vervielfältigungsmittel (21, 22) so konfiguriert sind, dass sie einen anderen von der Bereitstellungsvorrichtung (30) über den linearen Kanal (40) bereitgestellten und unter Verwendung der ersten Liste erworbenen Inhalt vervielfältigen.

2. Terminal nach Anspruch 1, wobei die erste Liste vom Typ ABR (Adaptive Bit Rate) ist, wobei die ersten Segmente eine Auflösung aufweisen, die zwischen einer maximalen Auflösung und einer minimalen Auflösung variieren kann;
und dass die zweite Liste mit maximaler Bitrate ist, wobei alle zweiten Segmente eine maximale Auflösung aufweisen, mit der der Inhalt bei der Bereitstellungsentität verfügbar ist.

3. Terminal nach einem der vorhergehenden Ansprüche, wobei die Inhaltserfassungs- und Vervielfältigungsmittel (21, 22, 26) zum Speichern der ersten Segmente in einem Puffer des Terminals (10) eingerichtet sind.

4. Terminal nach einem der vorhergehenden Ansprüche, wobei die ersten und zweiten Informationselemente Webadressen und/oder Ressourcenkennungen umfassen.

5. Vorrichtung zum Bereitstellen (30) mindestens eines Audio- und/oder Videoinhalts an ein Endgerät (10) über einen linearen Kanal (40) mittels eines Kommunikationsnetzwerks (20) in einer Over-the-Top-, OTT-Umgebung, wobei die Vorrichtung (30) Folgendes umfasst:
Erzeugungsmittel, die zum Erzeugen einer ersten Liste erster Informationselemente konfiguriert sind, wobei jedes erste Informationselement sich auf ein erstes Segment des Inhalts bezieht, wobei eine Zusammenstellung der ersten Segmente einen Inhaltsabschnitt eines aktuellen Ereignisses in einem Vorstellungszeitplan des linearen Kanals darstellt, wobei der Inhaltsabschnitt sich auf das aktuelle Ereignis bezieht;
Empfangsmittel (25), die zum Empfangen einer ersten Anfrage nach einer Liste erster Informationselemente vom Terminal (10) konfiguriert ist;
Sendemittel, die so konfiguriert sind, dass sie als Antwort auf die erste Anfrage eine Antwort senden, die die erste Liste von Informationselementen umfasst,
**dadurch gekennzeichnet, dass** die Empfangsmittel zum Empfangen einer zweiten Anfrage (13) vom Terminal (10) konfiguriert sind,
wobei die Erzeugungsmittel so konfiguriert sind, dass sie als Antwort auf die zweite Anfrage (13) eine zweite Liste (14) erzeugen, die eine Vielzahl von zweiten Informationselementen einschließt, wobei sich jedes zweite Informationselement auf ein zweites Segment des Inhalts bezieht, wobei eine Zusammenstellung der zweiten Segmente einen Inhalt darstellt, der der Gesamtheit des aktuellen Ereignisses im Vorstellungsplan des linearen Kanals entspricht,
wobei die Bereitstellungsvorrichtung Mittel einschließt, die so konfiguriert sind, dass sie dem Terminal (10) das erste und das zweite Segment des Inhalts zur Erfassung durch das Terminal unter Verwendung der Informationselemente der ersten und zweiten Liste zur Verfügung stellen,
wobei die Bereitstellungsvorrichtung (30) so konfiguriert ist, dass sie die zweiten Segmente dem Terminal (10) in verschlüsselter Form zur Verfügung stellt,
und die Bereitstellungsvorrichtung (30) so konfiguriert ist, dass sie die zweiten Inhaltssegmente bereitstellt, während das Terminal einen anderen Inhalt vervielfältigt, der durch Verwendung der ersten Liste aus der Bereitstellungsvorrichtung (30) über den linearen Kanal (40) erfasst wurde.

6. Vorrichtung nach Anspruch 5, umfassend ein einzelnes Gerät oder eine Vielzahl von verteilten Geräten.

7. Vorrichtung nach Anspruch 5 oder 6, die so konfiguriert ist, dass sie das zweite Segment für eine vorbestimmte Zeit nach dem Ende des aktuellen Ereignisses (41) gemäß dem Vorstellungszeitplan des linearen Kanals zur Erfassung durch das Terminal bereithält.

8. System, umfassend ein Terminal nach einem der Ansprüche 1 bis 4 und eine Bereitstellungsvorrichtung nach einem der Ansprüche 5 bis 7.

9. Verfahren zum Erfassen, mittels eines Endgeräts (10), mindestens eines Audio- und/oder Videoinhalts, der von einer Bereitstellungsentität (30) mittels eines Kommunikationsnetzwerks (20) über einen linearen Kanal (40) in einer Over-the-Top-, OTT-Umgebung bereitgestellt wird, umfassend folgende Schritte:
Senden einer ersten Anfrage für einen Inhalt mittels des Terminals an die Bereitstellungsvorrichtung (30),
Empfangen, über das Terminal, von der Bereitstellungsvorrichtung (30) als Antwort auf die erste Anfrage, einer ersten Liste, die eine Vielzahl von ersten Informationselementen einschließt, wobei jedes erste Informationselement der ersten Liste sich auf ein erstes Segment des Inhalts bezieht, wobei eine Zusammenstellung der ersten Segmente einen Inhaltsabschnitt eines aktuellen Ereignisses in einem Vorstellungszeitplan des linearen Kanals darstellt, wobei der Inhaltsabschnitt sich auf das aktuelle Ereignis bezieht,
Erfassen der ersten Inhaltssegmente über das Terminal von der Bereitstellungsvorrichtung (30) unter Verwendung der ersten Informationselemente, die in der ersten Liste eingeschlossen sind;
**dadurch gekennzeichnet, dass** sie folgende Schritte umfasst:
als Antwort auf einen von einem Terminalbenutzer empfangenen Befehl das Senden einer zweiten Anfrage an die Bereitstellungsvorrichtung (30) über das Terminal zum Erhalten einer zweiten Liste, die eine Vielzahl von zweiten Informationselementen einschließt, wobei sich jedes zweite Informationselement, das sich auf ein zweites Segment des Inhalts bezieht, worin eine Zusammenstellung der zweiten Segmente den gesamten Inhalt darstellt, der der Gesamtheit des aktuellen Ereignisses im Vorstellungszeitplan des linearen Kanals entspricht, der mittels des Terminals erfasst, von der Bereitstellungsvorrichtung (30) die zweiten Segmente des Inhalts unter Verwendung der in der zweiten Liste eingeschlossen zweiten Informationselemente,
wobei das Verfahren weiter das Empfangen der zweiten Segmente in verschlüsselter Form und das Speichern der zweiten Segmente in verschlüsselter Form auf einem nichtflüchtigen Speicher (23) des Terminals umfasst,
und, während des Erfassens der zweiten Inhaltssegmente von der Bereitstellungsvorrichtung (30), Vervielfältigen eines anderen Inhalts, der von der Bereitstellungsvorrichtung (30) über den linearen Kanal (40) bereitgestellt und unter Verwendung der ersten Liste erfasst wird.

## Revendications

1. Terminal (10) d'acquisition d'au moins un contenu audio et/ou vidéo fourni au moyen d'un réseau (20) de communication via un canal linéaire (40) par un appareil (30) de fourniture dans un environnement de diffusion en continu, OTT, le terminal (10) comprenant :
des moyens (24) de demande pour envoyer audit appareil (30) de fourniture une première demande de contenu,
des moyens (25) de réception pour recevoir en provenance de l'appareil (30) de fourniture, en réponse à la première
demande, une première liste comportant une pluralité de premiers éléments d'informations, chaque premier élément d'informations de la première liste se rapportant à un premier segment du contenu, dans lequel un ensemble des premiers segments constitue une partie de contenu d'un événement courant dans un programme de spectacles du canal linéaire, la partie de contenu se rapportant à l'instant courant,
des moyens (21, 22, 26) d'acquisition et de reproduction de contenu adaptés pour acquérir auprès de l'appareil (30) de fourniture lesdits premiers segments de contenu en utilisant lesdits premiers éléments d'informations intégrés dans la première liste ;
**caractérisé en ce que** lesdits moyens (24) de demande sont configurés pour, en réponse à une instruction (28) reçue d'un utilisateur de terminal, envoyer une seconde demande (13) à l'appareil (30) de fourniture pour obtenir une seconde liste (14) comportant une pluralité de seconds éléments d'informations, chaque second élément d'informations se rapportant à un second segment du contenu, dans lequel un ensemble des seconds segments constitue un contenu correspondant à l'intégralité de l'événement courant (41) dans le programme de spectacles du canal linéaire (40),
les moyens (25) de réception étant configurés pour recevoir ladite seconde liste de l'appareil (30) de fourniture ;
les moyens (21, 22, 26) d'acquisition et de reproduction de contenu étant configurés pour acquérir auprès de l'appareil (30) de fourniture lesdits seconds segments de contenus en utilisant lesdits seconds éléments d'informations intégrés dans la seconde liste ;
dans lequel le terminal est configuré pour recevoir les seconds segments sous une forme chiffrée et pour mémoriser les seconds segments sous une forme chiffrée sur une mémoire non volatile (23) du terminal,
dans lequel, alors que les moyens (21, 22, 26) d'acquisition et de reproduction de contenu acquièrent les seconds segments de contenu auprès de l'appareil (30) de fourniture, les moyens (21, 22) d'acquisition et de reproduction de contenu sont configurés pour reproduire un autre contenu fourni par l'appareil (30) de fourniture via le canal linéaire (40) et acquis en utilisant la première liste.

2. Terminal selon la revendication 1, dans lequel la première liste est du type ABR (débit binaire adaptatif), dans lequel les premiers segments ont une résolution qui peut varier entre une résolution maximale et une résolution minimale ;
et en ce que la seconde liste est à un débit binaire maximal, dans lequel tous les seconds segments ont une résolution maximale à laquelle le contenu est disponible au niveau de l'entité de fourniture.

3. Terminal selon l'une quelconque des revendications précédentes, dans lequel les moyens (21, 22, 26) d'acquisition et de reproduction de contenu sont configurés pour mémoriser les premiers segments dans un tampon du terminal (10).

4. Terminal selon l'une quelconque des revendications précédentes, dans lequel lesdits premiers et seconds éléments d'informations comprennent des adresses web et/ou des identifiants de ressources.

5. Appareil (30) de fourniture d'au moins un contenu audio et/ou vidéo à un terminal (10) via un canal linéaire (40) au moyen d'un réseau (20) de communication dans un environnement de diffusion en continu, OTT, ledit appareil (30) comprenant :
des moyens de génération configurés pour générer une première liste de premiers éléments d'informations, chaque premier élément d'informations se rapportant à un premier segment du contenu, dans lequel un ensemble des premiers segments constitue une partie de contenu d'un événement courant dans un programme de spectacles du canal linéaire, la partie de contenu se rapportant à l'instant courant,
des moyens (25) de réception configurés pour recevoir, en provenance du terminal (10), une première demande d'une liste de premiers éléments d'informations ;
des moyens d'envoi configurés pour envoyer, en réponse à ladite première demande, une réponse comprenant la première liste d'éléments d'informations,
**caractérisé en ce que** les moyens de réception sont configurés pour recevoir une seconde demande (13) provenant du terminal (10),
dans lequel les moyens de génération sont configurés pour générer, en réponse à ladite seconde demande (13), une seconde liste (14) comportant une pluralité de seconds éléments d'informations, chaque second élément d'informations se rapportant à un second segment du contenu, dans lequel un ensemble des seconds segments constitue un contenu correspondant à l'intégralité de l'événement courant dans le programme de spectacles du canal linéaire,
l'appareil de fourniture comportant des moyens configurés pour mettre à la disposition du terminal (10) les premier et second segments du contenu pour l'acquisition par le terminal en utilisant les éléments d'informations des première et seconde listes,
dans lequel l'appareil (30) de fourniture est configuré pour fournir les seconds segments au terminal (10) sous une forme chiffrée,
et, l'appareil (30) de fourniture est configuré pour fournir les seconds segments de contenu alors que le terminal reproduit un autre contenu acquis en utilisant la première liste auprès de l'appareil (30) de fourniture via le canal linéaire (40).

6. Appareil selon la revendication 5, comprenant un dispositif unique ou une pluralité de dispositifs distribués.

7. Appareil selon la revendication 5 ou la revendication 6, configuré pour maintenir ledit second segment disponible pour une acquisition par le terminal pendant une durée prédéterminée après la fin de l'événement courant (41) selon le programme de spectacles du canal linéaire.

8. Système comprenant un terminal selon l'une quelconque des revendications 1 à 4 et un appareil de fourniture selon l'une quelconque des revendications 5 à 7.

9. Procédé d'acquisition, au moyen d'un terminal (10), d'au moins un contenu audio et/ou vidéo fourni par une entité (30) de fourniture au moyen d'un réseau (20) de communication via un canal linéaire (40) dans un environnement de diffusion en continu, OTT, comprenant les étapes suivantes :
l'envoi, au moyen du terminal, audit appareil (30) de fourniture d'une première demande de contenu,
la réception, via le terminal, en provenance de l'appareil (30) de fourniture en réponse à la première demande, d'une première liste comportant une pluralité de premiers éléments d'informations, chaque premier élément d'informations de la première liste se rapportant à un premier segment du contenu, dans lequel un ensemble des premiers segments constitue une partie de contenu d'un événement courant dans un programme de spectacles du canal linéaire, la partie de contenu se rapportant à l'instant courant,
l'acquisition, via le terminal, auprès de l'appareil (30) de fourniture desdits premiers segments de contenu en utilisant lesdits premiers éléments d'informations intégrés dans la première liste ;
**caractérisé en ce qu'**il comprend les étapes suivantes :
en réponse à une instruction reçue d'un utilisateur de terminal, l'envoi, via le terminal, d'une seconde demande à l'appareil (30) de fourniture pour obtenir une seconde liste comportant une pluralité de seconds éléments d'informations, chaque second élément d'informations se rapportant à un seconde segment du contenu, dans lequel un ensemble des seconds segments constitue le contenu intégral correspondant à l'intégralité de l'événement courant dans le programme de spectacles du canal linéaire, l'acquisition, au moyen du terminal, auprès de l'appareil (30) de fourniture des seconds segments du contenu en utilisant lesdits seconds éléments d'informations intégrés dans la seconde liste,
dans lequel le procédé comprend en outre la réception des seconds segments sous une forme chiffrée et la mémorisation des seconds segments sous une forme chiffrée sur une mémoire non volatile (23) du terminal,
et, tout en acquérant les seconds segments de contenu auprès de l'appareil (30) de fourniture,
la reproduction d'un autre contenu fourni par l'appareil (30) de fourniture via le canal linéaire (40) et acquis en utilisant la première liste.
